# EUROPEAN PATENT APPLICATION

(11) **EP 0 927 753 A1**
(43) Date of publication of application: **07.07.1999**
(21) Application number: 98124536.8
(22) Date of filing: 22.12.1998
(51) Int. Cl.: C09K 19/54, G02F 1/1333

(54) **Liquid crystal dispersed polymer electrooptical films having reverse morphology**

(30) Priority: 29.12.1997 IT MI972881
(71) Applicant: Sniaricerche S.C.P.A., I-75010 Pisticci Scalo (IT)
(72) Inventor: Hakemi, Hassan-Ali, 20035 Lissone (MI) (IT); Santangelo, Michele, 75019 Tricarico (MT) (IT)
(74) Representative: Forattini, Amelia

(57) **Abstract**

The invention provides a liquid crystal dispersed polymer electrooptical film comprising a liquid crystal material and a polymer material in which the electrooptical film has a reverse morphology and the liquid crystal material has cholesteric properties. The invention also provides a liquid crystal dispersed polymer electrooptical film comprising a liquid crystal material and a polymer material in which the electrooptical film has a reverse morphology and substantially no memory effect. Methods for making these electrooptical films are also provided.

## Description

### Field of the Invention

The present invention relates to liquid crystal dispersed polymer (LCDP) electrooptical films. These LCDP electrooptical films comprise a discontinuous polymer phase dispersed in a continuous liquid crystal phase.

### Background of the invention

Polymer dispersed liquid crystal (PDLC) electrooptical films are known. See U.S. Patent No. 4,435,047 to Fergason. In a PDLC electrooptical film a discontinuous liquid crystal phase is dispersed in a continuous polymer phase. PDLC electrooptical films can be used in switchable windows, light modulators, displays, and other types of devices to control light transmission.

Composites of liquid crystals dispersed in a polymer matrix, such as polymer dispersed liquid crystal (PDLC) and nematic curvilinearly aligned phase (NCAP) devices, generally comprise droplets of a biaxially birefringent, nematic liquid crystal material dispersed in a transparent polymeric matrix. Such devices are of interest because they can be electrically controlled or switched between relatively translucent (i.e., light scattering or nearly opaque) and relatively transparent (i.e., light transmitting) states. This switching is possible because the liquid crystal droplets exhibit birefringence, i.e., optical anisotropy. All liquid crystals have two indices of refraction: an extraordinary index of refraction measured along the long axis of the rigid rodlike liquid crystals, and a smaller ordinary index of refraction measured in a plane perpendicular to the long axis. As a result, the droplets strongly scatter light when they are randomly oriented in the matrix and the devices appear translucent (or nearly opaque). On the application of either an electric field or a magnetic field, however, the long axes of the liquid crystal droplets become aligned along the direction of the electric/magnetic field vector and more directly transmit light.

If the refractive indices of the liquid crystal material and the polymer matrix are closely matched while in the field-induced, aligned state, the devices appear transparent. Thus, upon the application of an electric or magnetic field, for example, the device switches from a state in which it appears translucent (nearly opaque) to a state in which it appears transparent. Upon removal of the electrical or magnetic field, the device reverts to a translucent (opaque) state.

Devices containing composites of liquid crystals dispersed in a polymer matrix have been used as light valves, filters, shutters, information displays, and in architectural glass and windows.

In scientific investigations of PDLC technology, a phenomenon known as reverse morphology or microsphere morphology has been mentioned infrequently. In a reverse morphology system the polymer phase is dispersed in a continuous liquid crystal phase. Reverse morphology systems are more difficult to use than typical PDLC systems because the liquid crystal phase is not neatly encapsulated within the polymer phase and there often is less polymer to provide strength to the film in a reverse morphology system.

Reverse morphology systems have been described previously. Yamagishi et al., Proc. SPIE, 1080:24-31 (1989) describes a reverse morphology system having a nematic liquid crystal and a memory effect. Nomura et al., J. Appl. Phys., 68(6):2922-2926 (1990) describes an electrooptical film with a nematic liquid crystal component, connected polymer microspheres, and a memory effect. These documents do not disclose reverse morphology systems having no memory effect and they do not disclose reverse morphology systems with a liquid crystal having cholesteric properties.

In comparison with a traditional PDLC film with microdroplet morphology ("Swiss cheese" morphology, where the continuous phase is the polymer matrix and discontinuous phase is composed of liquid crystal microdroplets), a typical LCDP film with reverse morphology has the following advantages: (1) single-mode and dual-mode function (with cholesteric liquid crystal); (2) lower haze (both modes with cholesteric liquid crystal); (3) improvements in transparency, contrast ratio, and resistivity; and (4) less brittleness.

### Summary of the INVENTION

The invention provides a liquid crystal dispersed polymer electrooptical film comprising a liquid crystal material and a polymer material in which the electrooptical film has a reverse morphology and the liquid crystal material has cholesteric properties; in this embodiment the electrooptical film can have a memory effect or substantially no memory effect. The invention also provides a liquid crystal dispersed polymer electrooptical film comprising a liquid crystal material and a polymer material in which the electrooptical film has a reverse morphology and substantially no memory effect; in this embodiment the liquid crystal may have cholesteric or nematic properties.

The invention provides a method for producing a liquid crystal dispersed polymer electrooptical film comprising: (a) providing a mixture of a liquid crystal material and a prepolymer material; (b) curing the mixture with ultraviolet radiation; and (c) cooling the result of step (b), to form an electrooptical film with a reverse morphology.

The invention also provides a method for producing a liquid crystal dispersed polymer electrooptical film comprising: (a) providing a mixture of a liquid crystal material and a prepolymer material; (b) cooling the mixture of step (a); and (c) curing the mixture of step (b) with ultraviolet radiation, to form an electrooptical film with a reverse morphology.

Additional features and advantages of the invention are set forth in the description which follows and in part will be apparent from the description. The objectives and other advantages of the invention will be realized and attained by the LCDP films, their uses, and their methods of manufacture as particularly pointed out in the written description, claims, and appended drawings. It is to be understood that both the foregoing general description and the following detailed description are exemplary and explanatory and are intended to provide further explanation of the invention as claimed.

### BRIEF DESCRIPTION OF THE DRAWINGS

Fig. 1 shows the coater/laminator used in some of the Examples. ITO-PET film unwinds 20, 22, and 26 release the ITO-PET film. Unwinds 20 and 22 are used for dry lamination (SIPS-PIPS or
   UV-PIPS) and unwinds 20 and 26 are used for wet lamination (TIPS). Temperature ovens 10 and 12 provide heat when necessary. UV oven 14 provides ultraviolet light and has UV lights 16 and 18. The liquid crystal prepolymer mixture is injected by injector 24.
Fig. 2 shows the morphology of the electrooptical film of Example 1.
Fig. 3 shows the morphology of the electrooptical film of Example 2.
Fig. 4 shows the morphology of the electrooptical film of Example 3.
Fig. 5 shows the morphology of the electrooptical film of Example 4.
Fig. 6 shows the morphology of the electrooptical film of Example 5.
Fig. 7 shows the morphology of the electrooptical film of Example 6.
Fig. 8 shows the morphology of the electrooptical film of Example 7.
Fig. 9 shows the morphology of the electrooptical film of Example 8.

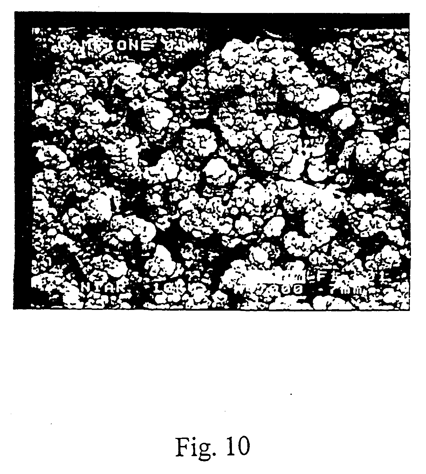

Fig. 10 shows the morphology of the electrooptical film of Example 15.
Fig. 11 shows the transmission-voltage curves of the electrooptical film of Example 15.
Fig. 12 shows the morphology of the electrooptical film of Example 16.
Fig. 13 shows the transmission-voltage curves of the electrooptical film of Example 16.
Fig. 14 shows the transmission-voltage curves of the electrooptical film of Example 17.
Fig. 15 shows the transmission-voltage curves of the electrooptical film of Example 18.
Fig. 16 shows the transmission-voltage curves of the electrooptical film of Example 19.

### DETAILED DESCRIPTION OF THE INVENTION

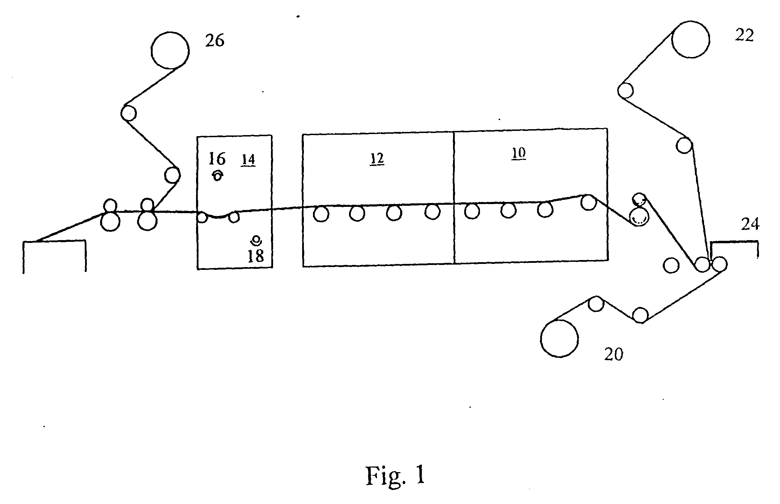

With particular reference to Figure 1, the mix is applied to a substrate based on ITO-PET, which is wound on a roll 20 before the application, is unwound from the roll 20 during the application, and is finally wound onto a second roll, not shown, after the setting of the mix. Generally, the mix is covered with a second substrate based on ITO-PET. The second substrate is wound on a third roll 22 before application, is unwound from the roll 22 during application, and is finally wound onto the second roll after the setting of the mix.

The following text describes the preparation and fabrication process of liquid crystal dispersed polymer electrooptical films on rigid and flexible conductive supports using Polymerization Induced Phase Separation (PIPS) and Thermally Induced Phase Separation (TIPS) methods. The LCDP films were prepared by either a one step process (i.e., PIPS or TIPS) or a two step process (i.e., TIPS/PIPS, PIPS/TIPS). Thermoset, thermoplastic, and UV-curable polymers and nematic and cholesteric liquid crystals were used in the formulations and preparation processes.

The film preparation procedures used were roll-to-roll coating and laminating techniques using either a lab coater or a pilot plant system.

The invention provides a liquid crystal dispersed polymer electrooptical film comprising a liquid crystal material and a polymer material in which the electrooptical film has a reverse morphology and the liquid crystal material has cholesteric properties. The liquid crystal material can comprise a nematic liquid crystal material and a chiral material; the liquid crystal material can comprise a chiral liquid crystal material. The liquid crystal material can comprise a cholesteric liquid crystal.

In one embodiment of the invention the electrooptical film has substantially no memory effect; in another embodiment of the invention the electrooptical film has a memory effect. In a preferred embodiment of the invention the electrooptical film has a contrast ratio greater than 10, more preferably than 12. In another embodiment the electrooptical film has a resistivity at 1000 Hz that is at least 50 percent greater than the resistivity of the comparison PDLC sample of Example 10, preferably at least 75 percent greater than the resistivity of the comparison PDLC sample of Example 10.

In one embodiment of the invention, the electrooptical film comprises greater than 20 percent by weight of polymer material relative to the total weight of liquid crystal material and polymer material. In other embodiments of the invention the electrooptical film comprises 30 percent or more by weight of polymer material; 40 percent or more by weight of polymer material; 50 percent or more by weight of polymer material; or 60 percent or more by weight of polymer material.

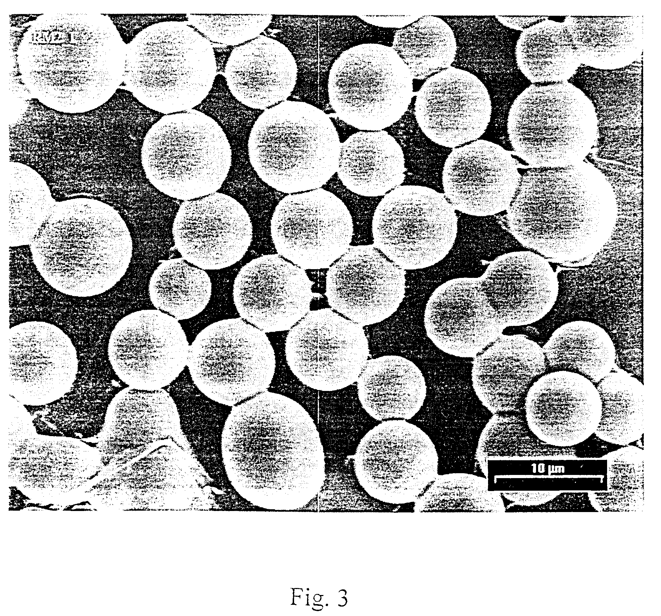

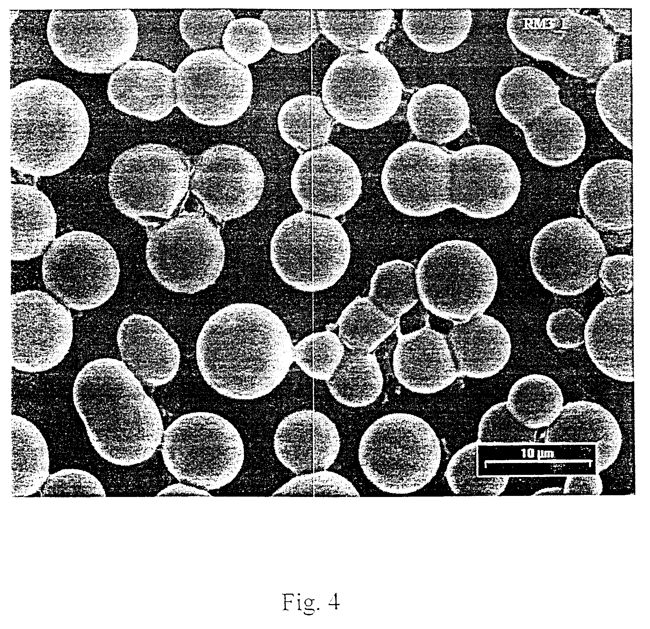

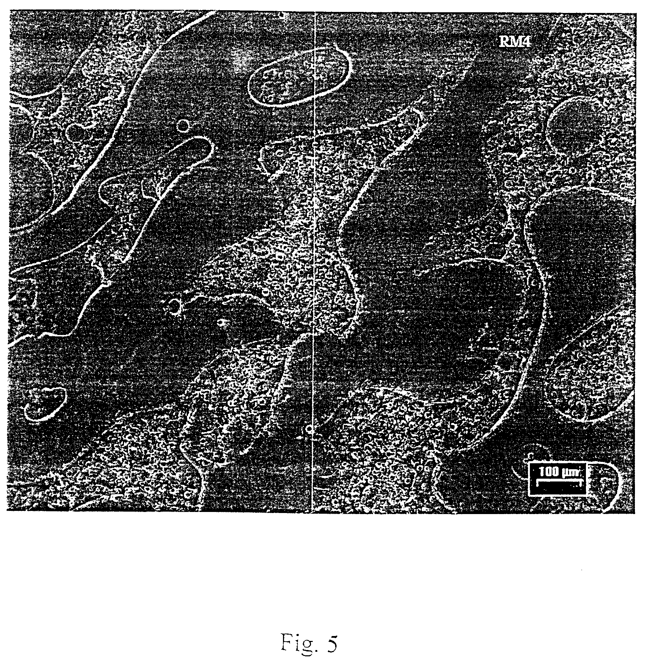

The electrooptical film has a reverse morphology, but there are different types of reverse morphologies. In one embodiment of the invention, the electrooptical film has the macro phase separation morphology. An example of the macro phase separation is shown in Fig. 5. In another embodiment of the invention, the electrooptical film has the individual microsphere morphology. Examples of the individual microsphere morphology are shown in Figs. 3 and 4.

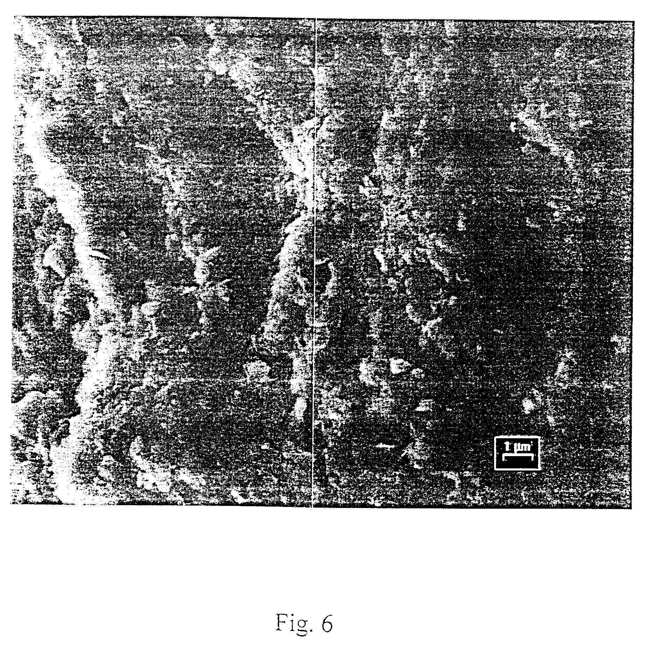

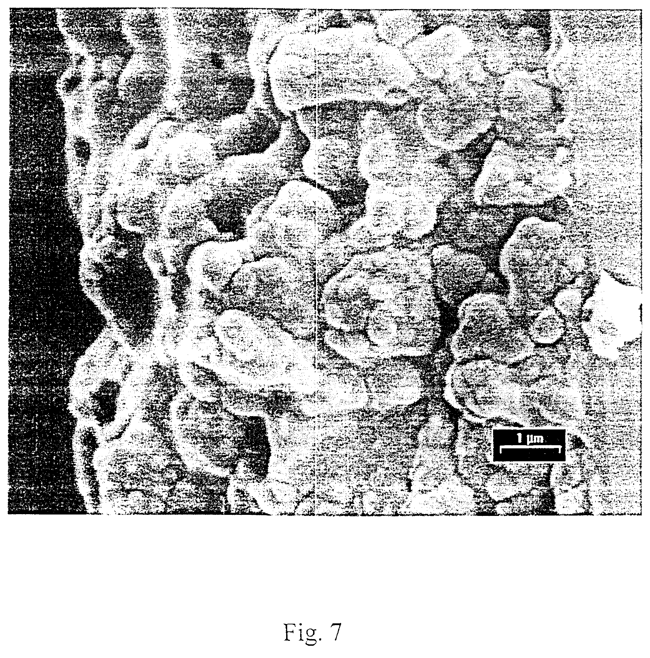

In still another embodiment of the invention, the electrooptical film has the substantially joined together microsphere morphology as shown in Figs. 6 and 7.

The electrooptical film can comprises spacers such as microspheres, microrods, or microfibers; in another embodiment, the electrooptical film does not comprise spacers. The microspheres formed in the method of the invention can substitute for spacers in certain embodiments of the invention. The electrooptical film can comprise a plastic sheet electrode, preferably at least two plastic sheet electrodes.

The invention also provides a liquid crystal dispersed polymer electrooptical film comprising a liquid crystal material and a polymer material in which the electrooptical film has a reverse morphology and substantially no memory effect.

In one embodiment of the invention, the electrooptical film comprises greater than 20 percent by weight of polymer material relative to the total weight of liquid crystal material and polymer material. In other embodiments of the invention the electrooptical film comprises 30 percent or more by weight of polymer material; 40 percent or more by weight of polymer material; 50 percent or more by weight of polymer material; 55 percent or more by weight of polymer material; or 60 percent or more by weight of polymer material.

In another embodiment of the invention, the liquid crystal material has cholesteric properties. The liquid crystal material having cholesteric properties can comprise a nematic liquid crystal material and a chiral material; the liquid crystal material having cholesteric properties can comprise a chiral liquid crystal material. The liquid crystal material having cholesteric properties can be a cholesteric liquid crystal. The liquid crystal material can have nematic properties; the liquid crystal material can comprise a nematic liquid crystal.

In a preferred embodiment of the invention the electrooptical film has a contrast ratio greater than 10, more preferably than 12. In another embodiment the electrooptical film has a resistivity at 1000 Hz that is at least 50 percent greater than the resistivity of the comparison PDLC sample of Example 10, preferably at least 75 percent greater than the resistivity of the comparison PDLC sample of Example 10.

The electrooptical film can have the macro phase separation morphology, the individual microsphere morphology, or the substantially joined together microsphere morphology.

The electrooptical film can comprises spacers such as microspheres, microrods, or microfibers; in another embodiment, the electrooptical film does not comprise spacers. The microspheres formed in the method of the invention can substitute for spacers in certain embodiments of the invention. The electrooptical film can comprise a plastic sheet electrode, preferably at least two plastic sheet electrodes.

The invention provides a method for producing a liquid crystal dispersed polymer electrooptical film comprising: (a) providing a mixture of a liquid crystal material and a prepolymer material; (b) curing the mixture with ultraviolet radiation: and (c) cooling the result of step (b), to form an electrooptical film with a reverse morphology.

The invention also provides a method for producing a liquid crystal dispersed polymer electrooptical film comprising: (a) providing a mixture of a liquid crystal material and a prepolymer material; (b) cooling the mixture of step (a); and (c) curing the mixture of step (b) with ultraviolet radiation, to form an electrooptical film with a reverse morphology.

In one embodiment of this method, the liquid crystal material has cholesteric properties. The liquid crystal material having cholesteric properties can comprise a nematic liquid crystal material and a chiral material; the liquid crystal material having cholesteric properties can comprise a chiral liquid crystal material.

In this method, the electrooptical film can have the macro phase separation morphology, the individual microsphere morphology, or the substantially joined together microsphere morphology. In one embodiment of this method, the electrooptical film has substantially no memory effect.

The invention also provides an electrooptical device comprising a source of electrical impulses and an electrooptical film of the invention, wherein the electrooptical film has a memory effect and the film is periodically subjected to an electrical impulse from the source to maintain the transparency or opacity of the film. Using the memory effect and periodic electrical impulses, the power consumption of the elecrooptical device can be reduced.

Various phase separation processes can be used to make LCDP elecrooptical films. Such phase separation processes include the following.
1. Polymerization Induced Phase Separation (PIPS). In polymerization induced phase separation, polymer aggregates form spontaneously in a continuous liquid crystal phase upon the separation of the liquid crystal and polymer phases. Phase separation is induced by causing the uncured polymeric material to polymerize. Phase separation by polymerization is particularly useful when prepolymer materials are miscible with low molecular weight liquid crystal compounds. A homogeneous solution is made by mixing the prepolymer with the liquid crystal. Polymerization is achieved through a condensation reaction, as with epoxy resins, through free radical polymerization, as with a vinyl monomer catalyzed with a free radical initiator such as a benzoylperoxide, or through a photo-initiated polymerization. As the polymerization progresses, polymer aggregates form a discontinuous phase within the continuous liquid crystal phase. The rate of polymerization is controlled by cure temperature for thermally cured polymers or by light intensity for photochemical polymerization.
2. Thermally Induced Phase Separation (TIPS). In thermally induced phase separation, a binary mixture of polymer and liquid crystal forms a solution at elevated temperature. Cooling the solution causes phase separation. As with the previous process, the liquid crystal material forms a continuous phase which contains discontinuous polymer aggregates.
3. Solvent Induced Phase Separation (SIPS). In solvent induced phase separation, a polymer, liquid crystal, and organic solvent are mixed together and the solvent is evaporated. The evaporation of the solvent causes phase separation. Combinations of these methods of phase separation may also be used.

Polymers used in making LCDP composites are from two categories, thermosetting polymers and thermoplastic polymers. The thermoplastic resin may be any known resin. Thermoplastic polymers useful in the present invention include polyethylene; polypropylene; poly(1-butene); poly(4-methyl-1-pentene); polyisobutylene; polystyrene; polybutadiene; polychloroprene; poly(methyl methacrylate); poly(ethyl methacrylate); poly(n-butyl methacrylate); poly(vinyl acetate); poly(vinyl alcohol); poly(vinyl chloride); poly(vinylidene chloride); poly(vinyl fluoride); poly(vinylidene fluoride); poly(caprolactam); poly(hexamethyleneadipamide); poly(ethylene terephthalate); polyoxymethylene; poly(ethylene oxide); poly(propylene oxide); poly(phenylene oxide); Bisphenol A polycarbonate; dimethyl polysiloxane; poly(N-vinylpyrrolidinone); poly(ethyleneimine); ethyl cellulose; methyl cellulose; hydroxyethyl cellulose; hydroxypropyl cellulose; sodium carboxymethyl cellulose; cellulose nitrate; cellulose acetate; poly(acrylic acid) and its salts; poly(methacrylic acid) and its salts; polyacrylamide; polyacrylonitrile; poly(methacrylonitrile); poly(caprolactone); phenoxy resins; 2-hydroxyethyl methacrylate polymers; 2-hydroxypropyl methacrylate polymers; acrylonitrile 2-hydroxyethylacrylate polymers; acrylonitrile 2-hydroxypropylmethacrylate polymers; ethylene-ethyl acrylate copolymers; ethylene-propylene copolymers; ethylene-vinyl acetate copolymers; vinyl chloride-vinyl acetate compolymers; styrene-butadiene copolymers; styrene-isoprene copolymers; styrene-acrylonitrile copolymers; styrene-methyl methacrylate copolymers; polyvinyl butyral; poly(methyl acrylate); poly(ethyl acrylate); poly(vinyl propionate); ethylene-acrylic acid compolymers and their salts; cellulose acetate; cellulose propionate; cellulose acetate butyrate; poly(diallyl phthalate); poly(decamethylene adipamide); poly(11-aminoundecanoic acid); poly(12-aminododecanoic acid);poly(methyl vinyl ether); poly(isobutyl vinyl ether); poly(isobutyl methacrylate), and poly(isocyanate).

As noted above, thermosetting resins may be used in the present invention.

Thermosetting polymers undergo a cure reaction where they are transformed from a lower molecular weight composition with heat, with or without catalyst, hardeners, modifiers, and the like, into a higher molecular weight cured thermoset resin. Thermosetting is the act of using heat to transform the lower molecular weight precursor to the cured product. The temperature needed to accomplish this is dependent upon the time given to the reaction, catalysts employed, and the relative reactivities of the complementary functional groups in the precursor. The thermosetting resin may be any known resin.

Thermosetting epoxy matrix resins that cure at temperatures from about 120°C to about 170°C, or higher, are suitable for use in LCDP composites, but bismaleimide (BMI), phenolic, polyester, PMR-15 polyimide and acetylene terminated resins, typical high performance thermosetting resins, are also usable in LCDP devices. Other thermosetting resins such as thermosetting resins from acrylics, polyurethanes, free-radically induced thermosetting resins, and the like, may be used to make LCDP composites. The typical thermosetting resin is an A-stage resin, but in some cases it may be desirable to utilize a B-stage resin. A B-stage resin will affect the viscosity of the resin formulation.

There are a variety of epoxy resins suitable for use in making LCPD composites. All epoxy resins start with an epoxy precursor that is capable of a homopolymerization reaction that is catalytically initiated, or coreacted with complementary functional compositions such as compounds with active hydrogen groups or other reactive groups capable of reacting with an epoxy resin to cause the molecular weight of the epoxy resin to increase. The performance of the cured epoxy resin is dependent upon the degree of functionality of the resin and the coreactant, the degree of aromaticity of the resin, the molecular weight of the epoxy resin and any coreactant prior to reaction, and the level of cure of the resin.

The coreactant may be a curing agent and/or hardener.

The liquid crystal materials which are useful in carrying out the present invention includes smectics, nematics, cholesterics, ferroelectrics, as well as organometallic mesogens. See PCT Publication No. WO 95/01410 (Hakemi).

Typical organic classes of liquid crystal-forming materials that may be used include both aromatic and aliphatic organic compounds such as benzylideneanilines, generally prepared from the reaction of para-substituted benzaldehyde and parasubstituted aniline; N-(p-alkoxybenzylidene)-p-aminostyrenes, prepared from the reaction of the appropriate aldehyde with p-aminostyrene; derivatives of beta sitosterol; active amyl ester of cyano benzylidene amino-cinnamate; p-phenylene containing compounds such as p-phenylene p-alkoxybenzoates; aminoacetophenones; aminopropiophenones; phenylenediamines; chlorophenylenediamines; terphthals; p,p'-disubstituted diphenylacetylenes; p,p'-disubstituted-1,4-diphenylbutadienes; p,p'-diisubstituted phenyl benzoates; substituted phenyl alkyl carbonates and diphenyl carbonates; p-n-alkyl benzoic acids; p-n-alkoxy benzoic acids; and Schiff bases prepared from p-substituted benzaldehydes and compounds of the following types: p-phenylenediamines, 4,4'-diaminobiphenyls, 4-phenylazoanilines, naphthylamines, and naphtylenediamines.

Specific liquid-crystal compounds include ethyl p-4-ethoxybenzylideneaminocinnamate; p,p'-azoxybenzoic acid diethyl ester; N-(p-methoxybenzylidene)-p-aminostyrene; N-(p-butoxybenzylidene)-p-aminostyrene; p-azoxyanisole; p-hexyloxybenzalazine; p-azoxy-phenetole; p-anisylidene-p-biphenylamine; p-ethoxy-benzylindene-p-biphenylamine; p-anisylidene-p-aminophenyl acetate; p-ethoxybenzylidene-p-aminophenyl acetate; p-n-hexyloxybenzylidene-p-aminophenyl acetate; p-n-hexoloxy-benzylidene-p-aminophenyl acetate; deca-2,4-dienoic acid; 4,4' di-n-heptoxyazoxybenzene; 4,4' di-n-pentoxyazoxybenzene; 4,4' di-n-butoxyazoxybenzene; 4,4'diethoxyazoxybenzene; undeca-2,4-dienoic acid; nona-2,4-dienoic acid; 4,4' dimethoxystilbene; 2,5-di(p-ethoxybenzylidene)cyclopentanone; 2,7-di-(benzylideneamino) fluorene; 2-p-methoxybenzylideneamino-phenanthrene; 4-methoxy-4''-nitro-p-terphenyl; 4-p-methoxybenzylideneaminobiphenyl; 4,4'-di(benzylideneamino)biphenyl; p-n-hexylbenzoic acid; p-n-propoxybenzoic acid; trans-p-methoxycinamic acid; 6-methoxy-2-naphtholic acid; p-phenylene di-p-anisate; p-phenylene di-p-ethoxy-benzoate; p-phenylene di-p-n-hexyloxybenzoate; p-phenylene di-p-n-heptyloxybenzoate; p-phenylene di-p-n-octyloxybenzoate; 1,4-bicy-clo[2.2.2.]octylenedi-p-anisate; 1,4-bicyclo[2.2.2]octylene di-p-n-octyloxy-benzoate; trans-1,4-cyclohexylene di-p-n-butoxybenzoate; 4,4'-di(p-methoxybenzylideneamino)dibenzyl; p,p'-diacetoxystilbene; 1,2-di(p-methoxyphenyl)-acetylene; p-(p-acetoxyazo) benzoic acid; 1,4-di-(p-methoxyphenyl)-butadiene; p-anisal-p-anisidine; p,p'dimethoxydibenzal-1,4-naphthalenediamine; p-n-butylbenzoic acid; p,p'-di-n-butyldiphenylpyridazine; p-(p-cyanobenzal) anisdine; p-(p-methoxybenzoxy benzoic acid, anisal-p-aminozobenzene; 1-(4'-anisalamino)-4-phenylazonaphthalene; N-(p-methoxy-benzylidene)-p-n-butylaniline; N-(p-n-octyloxybenzylidene)-p-n-butylaniline; p-anisylidene-p-phenylazoaniline; N,N'-dibenzylidenebenzidine; N,N'-di(p-n-hexyloxybenzylidene) benzidine; p-bis(-heptyloxybenzoyloxy)benzene; p-n-propoxybenzoic acid; p-n-butoxybenzoic acid; p-n-amyloxybenzoic acid; p-n-hexyloxybenzoic acid; p-n-heptyloxybenzoic acid; p-n-octyloxybenzoic acid; butyl-p-(p-ethoxy-phenoxycarbonyl)phenylcarbonate; p-(p-ethoxy-phenylazo)- phenylheptanoate; 4-[(p-hexyloxycarbonyloxybenzylidene)amino]-1-pentyloxybenzene; N-p-(pentyloxycarbonyloxy)benzylidene]-p-anisidine; p-[(p-butoxy-phenyl)azo]phenyl butyl carbonate; p-(p-ethoxyphenylazo)phenyl hexanoate; p-(p-ethoxyphenylazo)phenyl valerate; p-[(p-ethoxybenzylidene)amino]benzonitrile; p-[(p-methoxybenzylidene)amino]benzonitrile; ethyl p-[(p-methoxybenzylidene)amino]cinnamate; p-(p-ethoxypheny-lazo)-phenyl crotonate; p-[(p-methoxybenzylidene)amino]-phenyl p-toluate; p-[(p-methoxybenzylidene)amino]-phenylbenzoate; p-[(p-ethoxybenzylidene)amino]phenylbenzoate; N, N'-di(p-methoxybenzylidene)-α, α'-biptoluidine; p-anisalazine; 4-acetoxy-3-methoxycinnamic acid; p-acetoxycinnamic acid; 4'-[(p-pentyloxycarbonyloxybenzylidene)amino-valerophenonel diethyl p,p'-azoxydicinnammate; 4-butoxybenzylidene-4'-aminoacetophenone; 4-decyloxybenzylidene-4'-aminoacetophenone; 4-dodecyloxybenzylidene-4'-aminoacetophenone; 4-heptyloxybenzylidene-4'aminoacetophenone; 4-hexyloxybenzylidene-4'-aminoacetophenone; 4-methoxybenzylidene-4'-aminoacetophenone; 4-nonyloxybenzylidene-4'-aminoacetophenone; 4-octyloxybenzlidene-4'-aminoacetophenone; 4-pentyloxybenzylidene-4'-aminoacetophenone; 4-propoxybenzylidine-4'-aminoacetophenone; 4-butoxybenzylidene-4'-aminopropiophenone; 4-heptyloxybenxylidene-4'-aminopropiophenone; 4-hexyloxybenzylidene-4'-aminopropiophenone; 4-methoxybenzylidene-4'-aminopropiophenone; 4-nonyloxybenzylidene-4'-aminopropiophenone; 4-octyloxybenzylidene-4'-aminopropiophenone; 4-pentyloxybenzyidene-4'-aminopropiophenone; 4-propoxybenzylidene-4'aminopropiophenone; bis-(4-bromobenzylidene)-2-chloro-1,4-phenylenediamine; bis-(4-chlorobenzylidene)-2-chloro-1,4-phenylenediamine; bis-(4-n-decyloxybenzylidene)-2-chloro-1,4-phenylenediamine; bis-(4-n-dodecyloxybenzylidene)-2-chloro-1,4-phenylenediamine; bis-(4-n-hexyloxybenzylidene)-2-chloro-1,4-phenylenediamine; bis-(4-methoxybenzylidene)-2-chloro-1,4-phenylenediamine; bis-(4-nonyloxybenzylidene)-2-chloro-1,4-phenylenediamine; bis-(4-n-octyloxybenzylidene)-2-chloro-1,4-phenylenediamine; bis-(4-n-pentyloxybenzylidene)-2-chloro-1,4-phenylenediamine; bis-(4-bromobenzylidene)-1,4-phenylenediamine; bis-(4-chlorobenzylidene)-1,4-phenylenediamine, bis-(4-n-decyloxybenzylidene)-1,4-phenylenediamine; bis-(4-n-dodecyloxybenzlidene)-1,4-phenylenediamine; bis-(4-fluorobenzylidene)-1,4-phenylenediamine; bis-(4-n-heptyloxybenzylidene)-1,4-phenylenediamine; bis-(4-n-hexyloxybenzylidene)-1,4-phenylenediamine; bis-(4-n-nonyloxybenzylidene)-1,4-phenylenediamine; bis-(4-n-hexyloxybenzylidene)-1,4-phenylenediamine; bis-(4-n-nonloxybenzlidene)-1,4-phenylenediamine; bis-(4-n-octyloxybenzylidene)-1,4-phenylenediamine; bis-(4-n-pentyloxybenzylidene)-1,4-phenylenediamine; terephthal-bis-(p-bromoaniline); terephthal-bis-(p-chloroaniline); terephathal-bis-(p-fluoroaniline); and terephthal-bis-(p-iodo-aniline).

Nematic liquid crystalline materials suitable for use include: p-azoxyanisole, p-azoxyphenetole, p-butoxybenzoic acid, p-methoxy-cinnamic acid, butyl-p-anisylidene-p-aminocinnamate, anisylidene p-amino-phenylacetate, p-ethoxy-benzal-amino-α-methyl-cinnamic acid, 1,4-bis(p-ethoxybenzylidene) cyclohexanone, 4,4'-dihexyloxybenzene, 4,4'-diheptyloxybenzene), anisal-p-amino-azo-benzene, anisaldazine, α-benzene-azo-(anisal-α'-naphthylamine), n, n'-nonoxybenzetoluidine; anilines of the generic group (p-n-alkoxybenzylidene-p-n-alkylanilines), such as p-methoxybenzylidene p'-n-butylaniline, p-n-butoxybenzylidene-p'-aminophenylacetate, p-n-octo-xybenzylidene-p'-aminophenylacetate, p-n-benzylideneproprionate-p'-aminophenylmethoxide, p-n-anixylidene-p'-aminophenylbuterate, p-n-butoxybenzylididene-p'-aminophenylpeatoate and mixtures thereof. Conjagated cyano-organic compounds that are useful are 7, 7', 8, 8'-tetracyanoquinodimethane (TCNQ), (2,4,7,-trinitro-9-fluorenylidene)-malono-nitrile (TFM), p-[N-(p'-methoxybenzylidene)amino]-n-butyl-benzene (MBBA), p-[N-(p'-ethoxybenzylidene)amino]amino]-butylbenzene (EBBA), p-[N-(p'-methoxybenzylidene)amino]phenyl butyrate, n-butyl-p-(p'-ethoxyphenoxycarbonyl)phenylcarbonate, p-methoxy-p'-n-butylazoxy-benzene, p-ethoxy-p'-n'-butylazobenzene, p-[N-(p'methoxybenzylidene)amino]benzonitrile (BBCA), p-[N-(p'-methoxybenzylidene)amino]benzonitrile (BBCA), p-[N-(p'-hexylbenzylidene)amino]benzonitrile (HBCA), pentylphenylmethoxy benzoate, pentylphenylpentyloxy benzoate, cyanophenylpentyl benzoate, cyanophenylheptyloxy benzoate, cyanophenyloctyloxy benzoate, and cyanophenylmethoxy benzoate.

Desirable nematic liquid crystals frequently comprise cyanobiphenyls, and may be mixed with cyanoterphenyls and with various esters. There are commercially available nematic type liquid crystal mixtures, such as liquid crystal mixture "E7" (Licrilite® BL001, from E. Merck, Darmstadt, Germany, or its subsidiaries such as EM Industries, Hawthorne, N.Y., and Merck Industrial Chemical, Poole, England) that is a mixture of (by weight), 51% 4'-n-pentyl-n-cyanobiphenyl (5CB), 21% 4'-n-heptyl-n-cyanobiphenyl (7CB), 16% 4'-n-octoxy-4-cyanobiphenyl, and 12% 4'-n-pentyl-4'-n-pentyl-4-cyanoterphenyl and that has a crystal to nematic liquid crystal phase transition temperature of -10°C and a liquid crystal to isotropic phase transition temperature of 60.5°C Illustrative of other such commercial liquid crystal mixtures are the following.

E43 is a . E31 is a mixture of cyanobiphenyls and a non-cyano biphenyl ester, available from E. Merck, supra, and having a crystal to nematic crystal phase transition temperature of -9°C and a liquid crystal to isotropic phase transition temperature of 61.5°C. E44 is a mixture of cyanobiphenyls, a cyanoterphenyl and a non-cyano biphenyl ester, available from E. Merck, supra, and having a crystal to nematic liquid crystal phase transition temperature of -60°C and a liquid crystal to isotropic phase transition temperature of 100°C. E63, from E. Merck, supra, is a liquid crystal mixture that is similar to the E7 with added cyclohexanes; it contains significant amounts of the commonly known liquid crystal component 5CB, 7CB, lesser amounts of 5CT, lesser amounts of Benzonitrile,4-(4 propyl-1-cyclohexen-1-yl), commonly known as PCH3, lesser amounts of 4-carbonitrile,4'(4-pentyl-1-cyclohexen-1-yl)-1,1'-biphenyl, commonly known as BCH5, and still lesser amounts of [1,1'-Biphenyl]-4-carboxylic acid, 4'heptyl-4'-cyano[1,1'-biphenyl]-4-yl ester, commonly known as DB71. K-12 is 4-cyano-4'-butylbiphenyl and has a crystal to nematic liquid crystal phase transition temperature of 48°C. K-18 is 4-cyano-4'-hexylbiphenyl and has a crystal to nematic liquid crystal phase transition temperature of 14.5°C and a liquid crystal to isotropic phase transition temperature of 29°C. K-21 is 4-cyano-4'-heptylbiphenyl and has a crystal to nematic liquid crystal phase transition temperature of 30°C. K-24 is 4-cyano-4'-octylbiphenyl and has a crystal to smectic A liquid crystal phase transition temperature of 21.5°C, a smectic C to nematic liquid crystal phase transition temperature of 33.5°C, and a nematic liquid crystal to isotropic phase transition temperature of 40.5°C. M-15 is 4-cyano-4'-pentoxybiphenyl and has a crystal to nematic liquid crystal phase transition temperature of 48°C and a liquid crystal to isotropic phase transition temperature of 68°C. M-18 is 4-cyano-4'-hexoxybiphenyl and has a crystal to nematic liquid crystal phase transition temperature of 57°C and a liquid crystal to isotropic phase transition temperature of 75.5°C. M-24 is 4-cyano-4'-octoxybiphenyl and has a crystal to smectic A liquid crystal phase transition temperature of 54.5°C, a smectic A to nematic liquid crystal phase transition temperature of 67.0°C, and a nematic to isotropic phase transition temperature of 80.0°C. Other desirable Licrilite® liquid crystal mixtures include BL003, BL004, BL009, BL011, BL012, BL032, BL036, BL037, BL045, BL046, ML-1001, ML-1002, as well as TL202, TL203, TL204 and TL205, all obtainable from E. Merck, supra.

TOTN404, available from Hoffman-LaRoche, Basel, Switzerland and Nutley, N.J., is a liquid crystal mixture similar to E7 but with added pyrimidines. It contains approximately 30 weight percent of 4-carbonitrile,4'-pentyloxy-1,1'-biphenyl, commonly known as 50CB, 14 weight percent of 4-carbonitrile,4'-octyloxy-1,1'-Biphenyl, commonly known as 80CB, 10 weight percent of 4-carbonitrile-4''-pentyl-1,1',4',1''-terphenyl, commonly known as 5CT, 10 weight percent of 4-(4-pentyl-2-pyrimidimyl)benzonitrile, commonly known as RO-CP-7035, 20 weight percent of 4-(4-heptyl-2-pyrimidimyl)-benzonitrile, commonly known as RO-CP-7037, and 15 weight percent of 4-[5-(4-butylphenyl)-2-pyrimiedinyl]benzonitrile, commonly known as RO-CM-7334.

ROTN-570, available from Hoffman-LaRoche is a cyanobiphenyl liquid crystal mixture that contains 51 weight percent of 4-cyano-4'-pentylbiphenyl, 25 weight percent of 4-cyano-4'-heptylbiphenyl, 16 weight percent of 4-cyano-4'-octyloxybiphenyl, and 8 weight percent of 4-cyano-4'-pentyl-p-terphenyl. Another desirable liquid crystal mixture from Hoffman-LaRoche is TNO623. Other liquid crystals that may be used include those available from Valiant Fine Chemicals, Yntai, China, under the names YM-1, YM-6, YM-7, YM-8, YM-9, and YM-63.

As mentioned above, cholesteric liquid crystals may also be used in the invention. A convenient way to obtain a material with cholesteric properties is to add a chiral dopant to a nematic liquid crystal. Common chiral dopants include CB15, a pure chiral component, from Merck, and cholesteryl acetate, available from Aldrich. Actual cholesteric liquid crystals can also be used. Examples of cholesteric liquid crystals include
cholesteryl esters of saturated and unsaturated, substituted and unsubstituted organic acids, esp. cholesteryl esters of C1 - to C22- aliphatic, monocarboxylic acids, e.g., cholesteryl nonanoate, cholesteryl crotonate, cholesteryl chloroformate, cholesteryl chlorodecanoate,
cholesteryl chloroeicosanoate, cholesteryl butyrate, cholesteryl caprate, cholesteryl oleate, cholesteryl linolate, cholesteryl linolenate, cholesteryl laurate, cholesteryl erucate, cholesteryl myristate, cholesteryl clupanodonate, oleyl cholesteryl carbonate, cholesteryl heptyl carbamate, decyl cholesteryl carbonate; cholesteryl esters of unsubstituted or halogenated aryl, -alkenaryl, -aralkenyl, -alkaryl and -aralkyl organic acids, especially cholesteryl esters of those organic acids containing an aromatic moiety and from 7 to 19 carbon atoms, such as, cholesteryl p-chlorobenzoate, cholesteryl cinnamate; cholesteryl ethers, e.g., cholesteryl decyl ether, cholesteryl lauryl ether, cholesteryl oleyl ether, etc.

The invention further contemplates an electrooptical device comprising an electrooptical film of the present invention. The devices of the invention include a thermally, electrically, magnetically and/or electromagnetically addressable liquid crystal electrooptical cell that has a film of the invention between two closely spaced electrodes in which the film is responsive to an applied voltage between the electrodes such that light transmittance through the liquid crystal material is selectable depending upon the resulting electric field strength, current flow, or charge passed through the cell. The cells typically contain sealant layers, support layers of transparent, electrically conductive film having sufficient supporting strength to maintain the structural integrity of the cell, polarizer elements when desirable, and associated adhesives. The electrooptical liquid crystal cells can be conveniently fabricated by a variety of techniques known in the art.

The cell can comprise two plastic sheet electrodes, preferably made conductive by means of a tin oxide coating. Alternately, one electrode of the electrooptical liquid crystal cells can result from a conductive coating, such as tin oxide, applied to a glass pane. This conducting glass pane and a conductive plastic sheet can be used to form the cell. Also, the cell can comprise two glass electrodes made conductive by means of a tin oxide coating.

### EXAMPLES

The following abbreviations are used in the Examples.
UV-PIPS: Polymerization Induced Phase Separation by UV exposure of photocurable prepolymers.
SIPS-PIPS: Polymerization Induced Phase Separation by curing thermosetting prepolymers in an oven.
TIPS: Thermally Induced Phase Separation by cooling of thermoplastic polymers.

### Example 1: Single-Step UV-PIPS

A liquid crystal dispersed polymer (LCDP) electrooptical film with reverse morphology was prepared by a single-step ultraviolet radiation cured polymer induced phase separation (UV-PIPS) method by preparing a homogeneous mixture of 40% (w/w) nematic liquid crystal TNO623 (Hoffmann-La Roche) and 60% (w/w) UV-curable polyurethane-diacrylate prepolymer mixture CN934D60 (Sartomer), which contains 60% (w/w) urethane, 40% (w/w) hexanediol-diacrylate, and an additional 1% (w/w) benzophenone photoinitiator. The mixture was mixed with a magnetic mixer at 60°C for about 10 minutes and then placed between two indium-tin oxide coated glass plates (ITO-glass plates) separated by microsphere spacers of 20 µm thickness. The ITO-glass plates are available from Donneley (USA) and had the following dimensions 5 cm x 5 cm x 0.12 cm. The indium-tin oxide on the glass had a thickness of 50 µm. The microsphere spacers were made of plastic and are available from Dodwell Hi-Tech/Sekisui (Japan).

The film was kept at room temperature (20-25°C) and cured with a high pressure mercury UV lamp using the coater/laminator system shown in Fig. 1. The high pressure mercury UV lamp used was a Helios Italquartz, Milan, Italy. The UV lamp had a power of 120 Watt per cm and the lamp was positioned at a distance of 25 cm from the sample and cured for about 30 minutes.

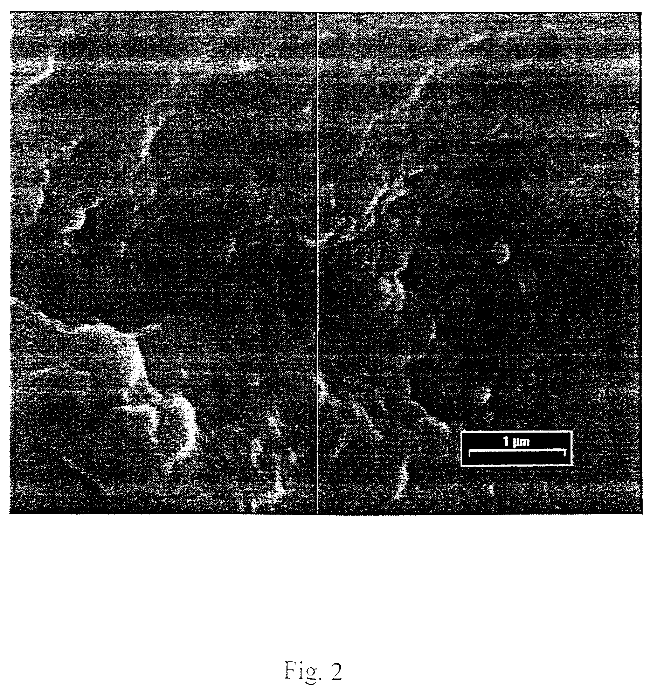

The morphology of the film was analyzed using a scanning election microscope (SEM). The scanning electron microscope was a model JSM-6300, available from JEOL, Japan. As shown in Fig. 2, the film had a reverse morphology.

### Example 2: Single-Step SIPS-PIPS

An LCDP electrooptical film with reverse morphology was prepared by a single-step SIPS-PIPS method by preparing a homogeneous mixture of 55% (w/w) cholesteric liquid crystal obtained mixing 5% of CB 15 (Merck) in 95% of E43 (Merck); and 45% (w/w) thermoset epoxy resin prepolymer (Capcure 3-800/Epon 828/Heloxy 5048=25.4/6.8/12.8%). The mixture was mixed with a magnetic mixer at 60°C for about 10 minutes and then placed between two ITO-PET films separated by microsphere spacers of 15 µm thickness, using the coater/laminator system shown in Fig. 1. The ITO-PET films are available from Courtaulds Performance Films (USA) or Southwall Technologies (USA) and had the following dimensions 10 cm x 20 cm x 375 µm. The indium-tin oxide on the PET films had a thickness of . The microsphere spacers were made of plastic and are available from Dodwell Hi-Tech/Sekisui (Japan). The film was then cured in a oven at 70 ° C for 4 hours.

The morphology of the film was analyzed using a scanning election microscope (SEM). The scanning electron microscope was a model JSM-3000. As shown in Fig. 3, the film had a reverse morphology with polymer microspheres (microspheres) with diameters of about 5 to 15 µm.

### Example 3: Single-Step SIPS-PIPS

An LCDP electrooptical film with reverse morphology was prepared by a single-step SIPS-PIPS method by preparing a homogeneous mixture of 55% (w/w) cholesteric liquid crystal obtained mixing 5% of CB15 (Merck) in 95% of E43 (Merck) - and 45% (w/w) thermoset epoxy resin prepolymer (Capcure 3-800 / Epon 828 / Heloxy 5048=25.4 / 6.8 / 12.8%). The mixture was mixed with a magnetic mixer at 60°C for about 10 minutes and then placed between two ITO-PET films separated by microsphere spacers of 15 µm thickness. The ITO-PET films are available from Courtaulds Performance Films (USA) or Southwall Technologies (USA) and had the following dimensions 10 cm x 20 cm x 375 µm.

The indium-tin oxide on the PET films had a thickness of . The microsphere spacers were made of plastic and are available from Dodwell Hi-Tech/Sekisui (Japan). The film was then cured in a oven at 85 ° C for 4 hours.

The morphology of the film was analyzed using a scanning election microscope (SEM). The scanning electron microscope was a model JSM-3000, available from JEOL, Japan. As shown in Fig. 4, the film had a reverse morphology, with polymer microspheres (microspheres) with diameters of about 5 to 15 µm.

### Example 4: Single-Step SIPS-PIPS

An LCDP electrooptical film with reverse morphology was prepared by a single-step SIPS-PIPS method by preparing a homogeneous mixture of 55% (w/w) cholesteric liquid crystal obtained mixing 5% of CB15 (Merck) in 95% of E43 (Merck); and 45% (w/w) thermoset epoxy resin prepolymer (Capcure 3-800 / Epon 828 / Heloxy 5048=25.4 / 6.8 / 12.8%). The mixture was mixed with a magnetic mixer at 60°C for about 10 minutes and then placed between two ITO-PET films separated by microsphere spacers of 15 µm thickness. The ITO-PET film are available from Courtaulds Performance Films (USA) or Southwall Technologies (USA) and had the following dimensions 10 cm x 20 cm x 375 µm. The indium-tin oxide on the PET films had a thickness of . The microsphere spacers were made of plastic and are available from Dodwell Hi-Tech/Sekisui (Japan).

The film was then cured in a oven at 100 ° C for 4 hours.

The morphology of the film was analyzed using a scanning election microscope (SEM). The scanning electron microscope was a model JSM-6300, available from JEOL (Japan). As shown in Fig. 5, the film had a reverse morphology, with a macro phase separation of the polymer from the liquid crystal.

### Example 5: Two-Step TIPS/UV-PIPS

An LCDP electrooptical film with reverse morphology was prepared by a two-step TIPS/UV-PIPS method by preparing a homogeneous mixture of 40% (w/w) nematic liquid crystal TNO623 (Hoffmann-La Roche); 45% (w/w) UV-curable polyurethane-diacrylate prepolymer mixture CN934D60 (Sartomer), which contains 60%(w/w) urethane, 40% (w/w) hexandiol-diacrylate, and an additional 1% (w/w) benzophenone photoinitiator; and 15% (w/w) of thermoplastic polyisobutyl-methacrylate PIBMA (Aldrich). The mixture was mixed with a magnetic mixer at 120°C for about 10 minutes and then placed between two indium-tin oxide coated glass plates (ITO-glass plates) separated by microsphere spacers of 25 µm thickness. The ITO-glass plates are available from Donneley (USA) and had the following dimensions 5 cm x 5 cm x 0. 12 cm. The indium-tin oxide on the glass had a thickness of 50 µm. The microsphere spacers were made of plastic and are available from Dodwell Hi-Tech/Sekisui (Japan).

The film was then phase separated by cooling to 15° C within 15 minutes. The film was then cured with a high pressure mercury UV lamp using the coater/laminator system shown in Fig. 1. The high pressure mercury UV lamp used was a Helios Italquartz, Milan, Italy. The UV lamp had a power of 120 Watt per cm and the lamp was positioned at a distance of 25 cm from the sample and cured for about 30 minutes.

The morphology of the film was analyzed using a scanning election microscope (SEM). The scanning electron microscope was a model JSM-6300, available from JEOL, Japan. As shown in Fig. 6, the film had a reverse morphology.

### Example 6: Two-Step UV-PIPS/TIPS

An LCDP electrooptical film with reverse morphology was prepared by a two-step UV-PIPS/TIPS method by preparing a homogeneous mixture of 40% (w/w) nematic liquid crystal TNO623 (Hoffmann-La Roche); 45% (w/w) UV-curable polyurethane-diacrylate prepolymer mixture CN934D60 (Sartomer), which contains 60%(w/w) urethane, 40% (w/w) hexandiol-diacrylate, and an additional 1% (w/w) benzophenone photoinitiator; and 15% (w/w) of thermoplastic polyisobutyl-methacrylate PIBMA (Aldrich). The mixture was mixed with a magnetic mixer at 120°C for about 10 minutes and then placed between two indium-tin oxide coated glass plates (ITO-glass plates) separated by microsphere spacers of 25 µm thickness. The ITO-glass plates are available from Donneley (USA) and had the following dimensions 5 cm x 5 cm x 0.12 cm. The indium-tin oxide on the glass had a thickness of 50 µm. The microsphere spacers were made of plastic and are available from Dodwell Hi-Tech/Sekisui (Japan).

The film was then phase separated by exposure to a high pressure mercury UV lamp using the coater/laminator system shown in Fig. 1. The high pressure mercury UV lamp used was a Helios Italquartz, Milan, Italy. The UV lamp had a power of 120 Watt per cm and the lamp was positioned at a distance of 25 cm from the sample and cured for about 30 minutes. Then, the film was cooled to 15 ° C in 15 minutes.

The morphology of the film was analyzed using a scanning election microscope (SEM). The scanning electron microscope was a model JSM-6300, available from JEOL (Japan). As shown in Fig. 7, the film had a reverse morphology, with polymer microspheres (microspheres) with a diameter of about 0.5 to 1 µm.

### Example 7: Two-Step UV-PIPS/TIPS

An LCDP electrooptical film with reverse morphology was prepared by a two-step UV-PIPS method by preparing a homogeneous mixture of 40% (w/w) nematic liquid crystal TNO623 (Hoffmann-La Roche); 30% (w/w) UV-curable polyurethanediacrylate prepolymer mixture CN934D60 (Sartomer), which contains 60% (w/w) urethane, 40% (w/w) hexandiol-diacrylate, and an additional 1% (w/w) benzophenone photoinitiator; and 30% (w/w) of thermoplastic poly-isobutylmethacrylate PIBMA (Aldrich). The mixture was mixed with a magnetic mixer at 120°C for about 10 minutes and then placed between two indium-tin oxide coated glass plates (ITO-glass plates) separated by microsphere spacers of 25 µm thickness. The ITO-glass plates are available from Donneley (USA) and had the following dimensions 5 cm x 5 cm x 0.12 cm. The indium-tin oxide on the glass had a thickness of 50 µm. The microsphere spacers were made of plastic and are available from Dodwell Hi-Tech/Sekisui (Japan).

The film was then phase separated by exposure to a high pressure mercury UV lamp using the coater/laminator system shown in Fig. 1. The high pressure mercury UV lamp used was a Helios Italquartz, Milan, Italy. The UV lamp had a power of 120 Watt per cm and the lamp was positioned at a distance of 25 cm from the sample and cured for about 30 minutes. Then, the film was cooled to 15 ° C in 15 minutes.

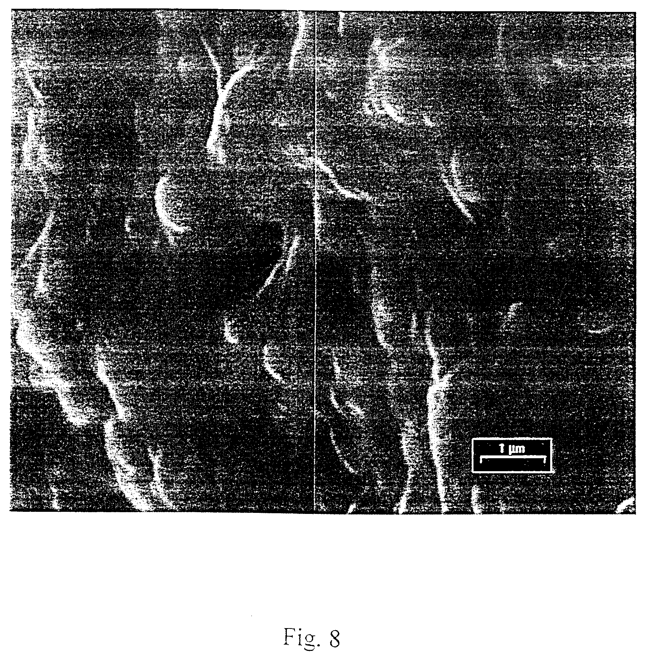

The morphology of the film was analyzed using a scanning election microscope (SEM). The scanning electron microscope was a model JSM-6300. As shown in Fig. 8, the film had a reverse morphology, with polymer microspheres (microspheres) with a diameter of about 0.5 to 1 µm.

### Example 8: Two-Step TIPS/UV-PIPS

An LCDP electrooptical film with reverse morphology was prepared by a two-step TIPS/UV-PIPS method by preparing a homogeneous mixture of 40% (w/w) nematic liquid crystal TNO623 (Hoffmann-La Roche); 30% (w/w) UV-curable polyurethane-diacrylate prepolymer mixture CN934D60 (Sartomer), which contains 60% (w/w) urethane, 40% (w/w) hexanedioldiacrylate, and an additional 1% (w/w) benzophenone photoinitiator; and 30% (w/w) of thermoplastic polyisobutyl-methacrylate PIBMA (Aldrich). The mixture was mixed with a magnetic mixer at 60°C for about 10 minutes and then placed between two indium-tin oxide coated glass plates (ITO-glass plates) separated by microsphere spacers of 25 µ m thickness. The ITO-glass plates are available from Donneley (USA) and had the following dimensions 5 cm x 5 cm x 0.12 cm. The indium-tin oxide on the glass had a thickness of 50 µm. The microsphere spacers were made of plastic and are available from Dodwell Hi-Tech/Sekisui (Japan).

The film was then phase separated by cooling to 15 ° C within 15 minutes. The film was then cured with a high pressure mercury UV lamp using the coater/laminator system shown in Fig. 1. The high pressure mercury UV lamp used was a Helios Italquartz, Milan, Italy. The UV lamp had a power of 120 Watt per cm and the lamp was positioned at a distance of 25 cm from the sample and cured for about 30 minutes.

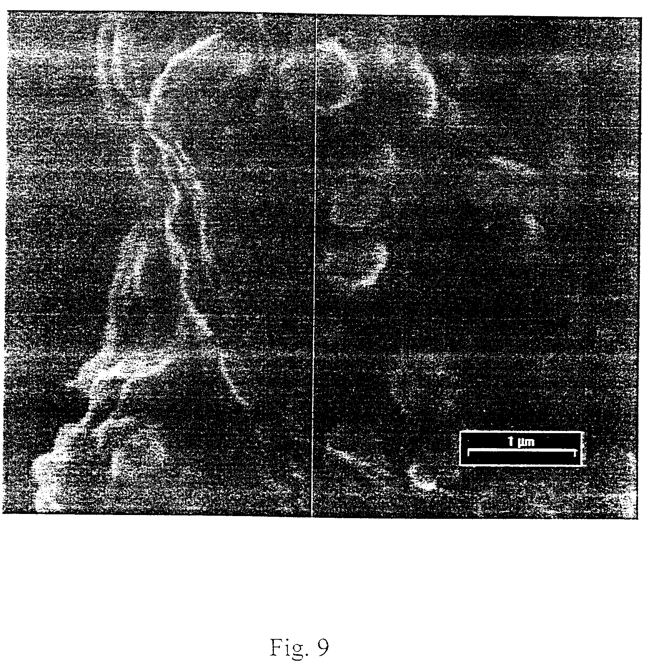

The morphology of the film was analyzed using a scanning election microscope (SEM). The scanning electron microscope was a model JSM-6300, available from JEOL (Japan). As shown in Fig. 9, the film had a reverse morphology, with polymer microspheres (microspheres) with a diameter of about 0.5 to 1 µm.

### Example 9: Single-Step TS-PIPS

The electrooptical properties of the film of Example 2 were measured. The results, reported below, indicated that the system showed the dual-modality behavior.

| Sample | Toff(%) | T*(%) | Ton(%) | V90(Volts) | V*(Volts) |
|---|---|---|---|---|---|
| RM2 | 32 | 18 | 77.3 | 45 | 14 |

### Example 10: Two-step UV-PIPS/TIPS

The film of Example 7 was analyzed. The contrast ratio (CR= Ton/Toff), i.e., the ratio of transparency/opacity of this LCDP film having a reverse morphology was 12.8, which was larger than the contrast ratio of 10 of a PDLC (microdroplets) film obtained using a 40% TNO623 - 60% PIBMA mixture by a single TIPS method. This comparison PDLC film was obtained by .

### Example 11: Two-step TIPS/UV-PIPS

The film of Example 5 was analyzed. The frequency-dependence resistivities of this LCDP film (reverse morphology) in comparison with those of a PDLC film microdroplet morphology with 40% TNO623 / 60% PIBMA formulation and single-step TIPS methods in the following table shows the comparable resistivities of the LCDP sample with respect to those of the PDLC film:

| Sample | 100 Hz | p (1013 Ω.m) 1000 Hz | 10,000 Hz |
|---|---|---|---|
| LCDP | 2.45 | 0.69 | 0.06 |
| PDLC | 2.13 | 0.60 | 0.11 |

The comparison PDLC film was the one obtained in Example 10.

### Example 12: Two-step TIPS/ UV-PIPS

The film of Example 10 was analyzed. The frequency-dependence resistivities of this LCDP film (reverse morphology) in comparison with those of a PDLC film microdroplet morphology with 40% TNO623 / 60% PIBMA formulation and single-step TIPS methods in the following table shows the improved resistivities of the LCDP sample with respect to those of the PDLC film:

| Sample | 100 Hz | p (1013 Ωm) 1000 Hz | 10,000 Hz |
|---|---|---|---|
| LCDP | 8.47 | 2.17 | 0.24 |
| PDLC | 2.13 | 0.60 | 0.11 |

The comparison PDLC film was the one obtained in Example 10.

### Example 13: Two-step UV-PIPS / TIPS

The film of Example 9 was analyzed. The frequency-dependence resistivities of this LCDP film (reverse morphology) in comparison with those of a PDLC film microdroplet morphology with 40% TNO623 / 60% PIBMA formulation and single-step TIPS methods in the following table shows the improved resistivities of the LCDP sample with respect to those of the PDLC film:

| Sample | 100 Hz | p (1013 Ωm) 1000 Hz | 10,000 Hz |
|---|---|---|---|
| LCDP | 7.68 | 1.39 | 0.13 |
| PDLC | 2.13 | 0.60 | 0.11 |

The comparison PDLC film was the one obtained in Example 10.

### Example 14: Two-step UV-PIPS / TIPS

The film of Example 8 was analyzed. The frequency-dependence resistivities of this LCDP film (reverse morphology) in comparison with those of a PDLC film microdroplet morphology with 40% TNO623 / 60% PIBMA formulation and single-step TIPS methods in the following table shows the improved resistivities of the LCDP sample with respect to those of the PDLC film:

| Sample | 100 Hz | p (1013 Ωm) 1000 Hz | 10,000 Hz |
|---|---|---|---|
| LCDP | 4.67 | 1.08 | 0.08 |
| PDLC | 2.13 | 0.60 | 0.11 |

The comparison PDLC film was the one obtained in Example 10.

### Example 15: LCDP with memory effect

A liquid crystal dispersed polymer (LCDP) electrooptical film with reverse morphology was prepared by a one-step UV-PIPS method by preparing a homogenuous mixture of 45% (w/w) nematic liquid crystal YM1 (Valiant Fine Chemicals), 40% (w/w) UV-curable acrylate monomer 2-hydroxy-methylmethacrylate (Aldrich) and 10% active prepolymer CN934D60 (Sartomer).

Then 3% (w/w) benzophenone photoinitiator and 2% of methylethyl diamine accelerator were added to make the final mixture. The mixture was mixed with a magnetic stirrer at 60 ° C for about 10 minutes and then coated and laminated between two ITO-PET films separated by microsphere spacers of 20 µm thickness using the coater/laminator system shown in Fig. 1. The ITO-PET films are available from Courtaulds Performance Films (USA) or Southwall Technologies (USA). The LCDP films had dimensions of 10 cm x 20 cm x 375 µm. The microsphere spacers were made of plastic and are available from Dodwell Hi-Tech/Sekisui (Japan).

The film was kept at room temperature (20-25 ° C) and phase separated and cured by exposing it to a high-pressure mercury UV lamp (a Helios Italquartz, Milan, Italy). The UV lamp had a power of 120 Watts per cm and the lamp was positioned at a distance of 25 cm from the sample for about 30 seconds. The morphology of the film was analyzed using a scanning electron microscope (SEM). The SEM was a model JSM-6300, available from JEOL (Japan).

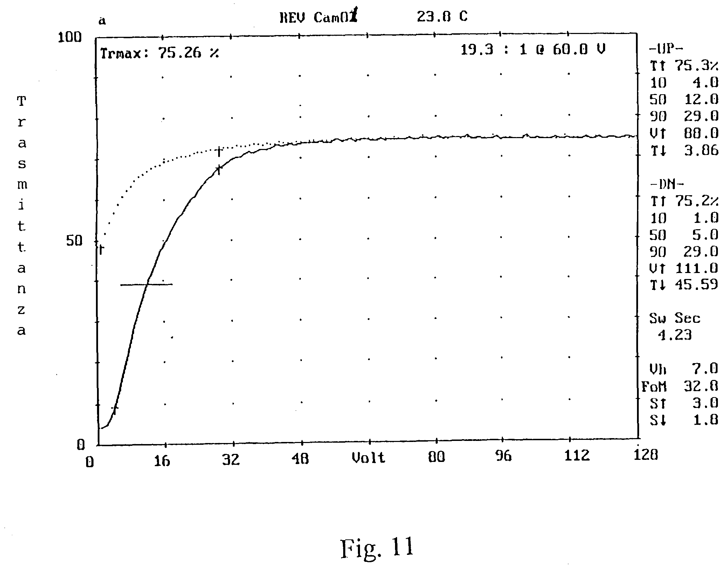

As shown in Fig. 11, the LCDP displays a positive curvature structure, indicative of connected microspheres, to create a reverse morphology. The electrooptical behavior of this film, as shown in the transmission-voltage (T-V) curves of Fig. 11, provides the following characteristics: field-off opacity of 3.9%, saturation voltage of 29 volts on T-V ramp-up (solid-line) curve, maximum field-on transparency of 75.3%, saturation voltage of 29 volts on T-V ramp-down (dotted-line) curve, and a field-off transparency (memory effect) of 45.6%.

### Example 16: LCDP without memory effect

A liquid crystal dispersed polymer (LCDP) electrooptical film with reverse morphology was prepared by a one-step UV-PIPS method by preparing a homogeneous mixture of 43% (w/w) nematic liquid crystal YM1 (Valiant Fine Chemicals), 10% chiral component CB15 (Merck UK), 34% (w/w) UV-curable acrylate monomer 2-hydroxy-methylmethacrylate (Aldrich) and 8% active prepolymer CN934D60 (Sartomer). Then 3% (w/w) benzophenone photo-initiator and 2% of methylethyl diamine accelerator were added to make the final mixture.

The mixture was mixed with a magnetic stirrer at 60 ° C for about 10 minutes and then coated and laminated between two ITO-PET films separated by microsphere spacers of 20 µm thickness using the coater/laminator system shown in Fig. 1.

The ITO-PET films are available from Courtaulds Performance Films (USA) or Southwall Technologies (USA). The LCDP films had dimensions of 10 cm x 20 cm x 375 µm. The microsphere spacers were made of plastic and are available from Dodwell Hi-Tech/Sekisui (Japan).

The film was kept at room temperature (20-25 ° C) and phase separated and cured by exposing it to a high-pressure mercury UV lamp (a Helios Italquartz, Milan, Italy). The UV lamp had a power of 120 Watts per cm and the lamp was positioned at a distance of 25 cm from the sample for about 30 seconds. The morphology of the film was analyzed using a scanning electron microscope (SEM). The SEM was a model JSM-6300, available from JEOL (Japan).

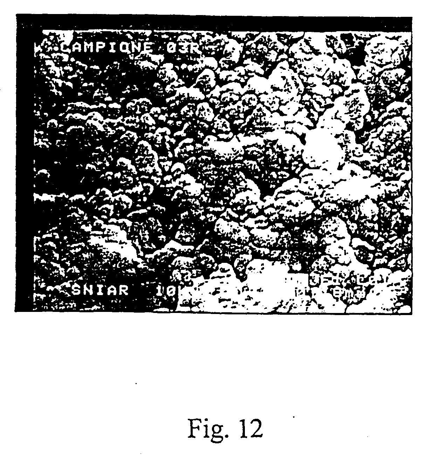

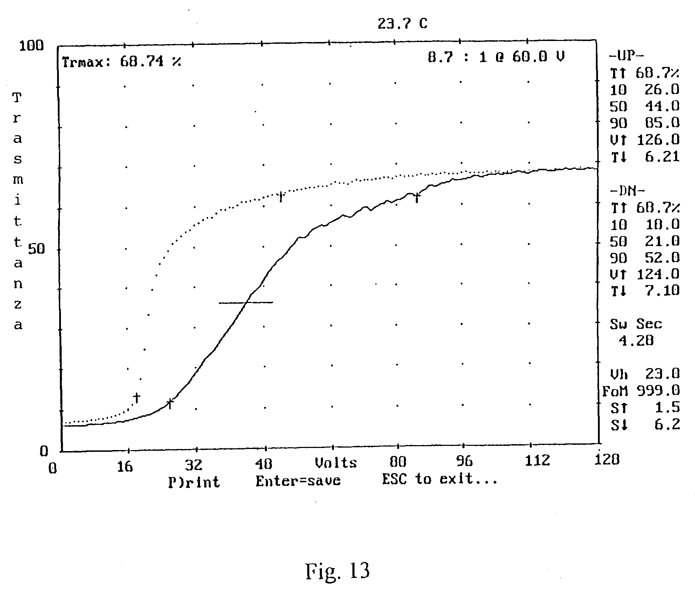

As shown in Fig. 12, the LCDP morphology presents a reverse morphology with a positive curvature structure due to a connected microsphere structure. The electrooptical behavior of this film, as shown in the transmission-voltage (T-V) curves of Fig. 13, provides the following characteristics: field-off opacity of 6.2%, saturation voltage of 85 volts on T-V ramp-up (solid-line) curve, maximum field-on transparency of 68.7%, saturation voltage of 52 volts on T-V ramp-down (dotted-line) curve, and a field-off transparency (non memory effect) of 7.1%.

### Example 17: LCDP without memory effect

A liquid crystal dispersed polymer (LCDP) electrooptical film with reverse morphology was prepared by a one-step UV-PIPS method by preparing a homogeneous mixture of 43% (w/w) nematic liquid crystal YM1 (Valiant Fine Chemicals), 10% chiral component CB15 (Merck UK), 34% (w/w) UV-curable acrylate monomer 2-hydroxy-methylmethacrylate (Aldrich) and 8% active prepolymer CN934D60 (Sartomer). Then 3% (w/w) benzophenone photo-initiator and 2% of methylethyl diamine accelerator were added to make the final mixture.

The mixture was mixed with a magnetic stirrer at 60 ° C for about 10 minutes and then coated and laminated between two ITO-PET films separated by microsphere spacers of 20 µm thickness using the coater/laminator system shown in Fig. 1.

The ITO-PET films are available from Courtaulds Performance Films (USA) or Southwall Technologies (USA). The LCDP films had dimensions of 10 cm x 20 cm x 375 µm. The microsphere spacers were made of plastic and are available from Dodwell Hi-Tech/Sekisui (Japan).

The film was kept at room temperature (20-25 ° C) and phase separated and cured by exposing it to a high-pressure mercury UV lamp (a Helios Italquartz, Milan, Italy). The UV lamp had a power of 120 Watts per cm and the lamp was positioned at a distance of 25 cm from the sample for about 180 seconds. The morphology of the film was analyzed using a scanning electron microscope (SEM). The SEM was a model JSM-6300, available from JEOL (Japan). This LCDP film showed a reverse morphology.

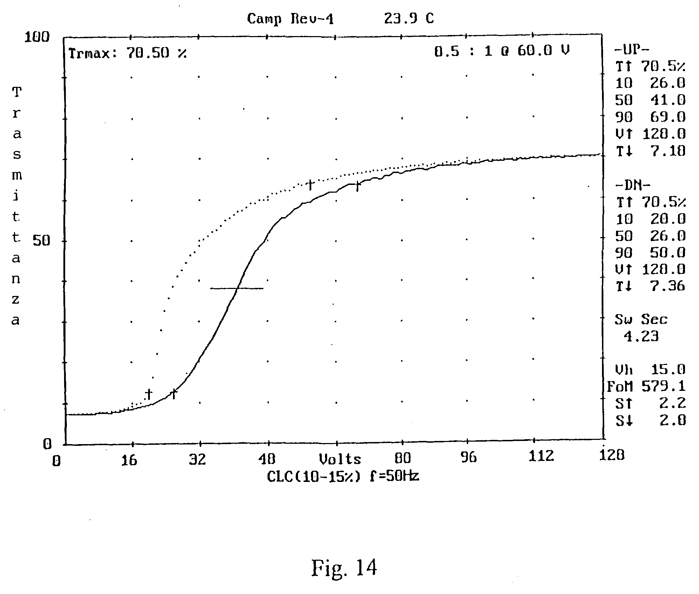

The electrooptical behavior of this film, as shown in Fig. 14, provides the following characteristics: field-off opacity of 7.2%, saturation voltage of 69 volts on T-V ramp-up (solid-line) curve, maximum field-on transparency of 70.5%, saturation voltage of 58 volts on T-V ramp-down (dotted-line) curve, and a field-off transparency (non memory effect) of 7.4%. Furthermore, this sample showed the switching properties of less than 7 milliseconds.

### Example 18: LCDP with memory effect

A liquid crystal dispersed polymer (LCDP) electrooptical film with reverse morphology was prepared by a one-step UV-PIPS method by preparing a homogeneous mixture of 45% (w/w) nematic liquid crystal YM1 (Valiant Fine Chemicals), 40% (w/w) UV-curable acrylate monomer 2-hydroxy-methylmethacrylate (Aldrich) and 10% active prepolymer CN934D60 (Sartomer)

Then 3% (w/w) benzophenone photoinitiator and 2% of methylethyl diamine accelerator were added to make the final mixture. The mixture was mixed with a magnetic stirrer at 60 ° C for about 10 minutes and then coated and laminated between two ITO-PET films separated by microsphere spacers of 20 µm thickness using the coater/laminator system shown in Fig. 1. The ITO-PET films are available from Courtaulds Performance Films (USA) or Southwall Technologies (USA). The LCDP films had dimensions of 10 cm x 20 cm x 375 µm. The microsphere spacers were made of plastic and are available from Dodwell Hi-Tech/Sekisui (Japan).

The film was kept at room temperature (20-25 ° C) and phase separated and cured by exposing it to a high-pressure mercury UV lamp (a Helios Italquartz, Milan, Italy). The UV lamp had a power of 120 Watts per cm and the lamp was positioned at a distance of 25 cm from the sample for about 180 seconds. The morphology of the film was analyzed using a scanning electron microscope (SEM). The SEM was a model JSM-6300, available from JEOL (Japan). This LCDP film has a reverse morphology with connected microspheres.

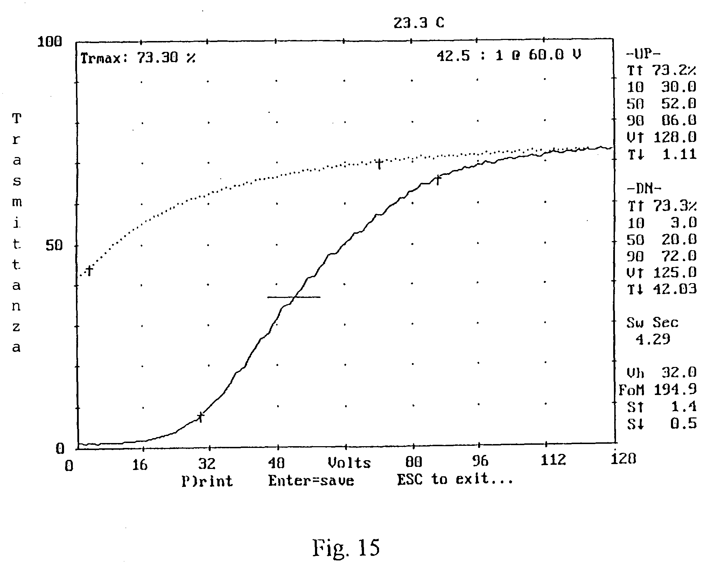

The electrooptical behavior of this film, as shown in the transmission-voltage (T-V) curves of Fig. 15, provides the following characteristics: field-off opacity of 1.1%, saturation voltage of 86 volts on T-V ramp-up (solid-line) curve, maximum field-on transparency of 73.2%, saturation voltage of 72 volts on T-V ramp-down (dotted-line) curve, and a field-off transparency (memory effect) of 42.0%.

### Example 19: LCDP without memory effect

A liquid crystal dispersed polymer (LCDP) electrooptical film with reverse morphology was prepared by a one-step UV-PIPS method by preparing a homogeneous mixture exactly like that of example 18, only the liquid crystal consisted of a cholesteric mixture consisting of 85% (w/w) nematic YM1 (Valiant Fine Chemicals), and 15% (w/w) chiral component CB15 (Merck UK).

The mixture was mixed with a magnetic stirrer at 60 ° C for about 10 minutes and then coated and laminated between two ITO-PET films separated by microsphere spacers of 20 µm thickness using the coater/laminator system shown in Fig. 1.

The ITO-PET films are available from Courtaulds Performance Films (USA) or Southwall Technologies (USA). The LCDP films had dimensions of 10 cm x 20 cm x 375 µm. The microsphere spacers were made of plastic and are available from Dodwell Hi-Tech/Sekisui (Japan).

The film was kept at room temperature (20-25 ° C) and phase separated and cured by exposing to a high-pressure mercury UV lamp (a Helios Italquartz, Milan, Italy). The UV lamp had a power of 120 Watts per cm and the lamp was positioned at a distance of 25 cm from the sample for about 180 seconds. The morphology of the film was analyzed using a scanning electron microscope (SEM). The SEM was a model JSM-6300, available from JEOL (Japan). This LCDP film has a reverse morphology with connected microspheres.

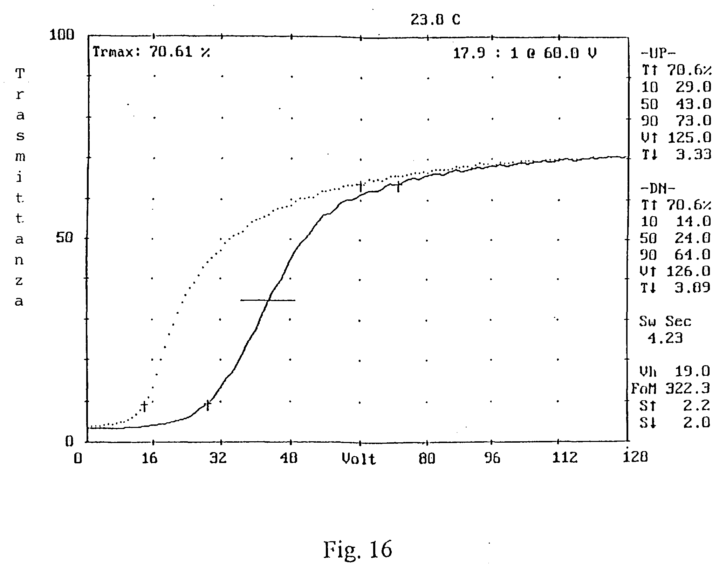

The electrooptical behavior of this film, as shown in the transmission-voltage (T-V) curves of Fig. 16, provides the following characteristics: field-off opacity of 3.3%, saturation voltage of 73 volts on TV ramp-up (solid-line) curve, maximum field-on transparency of 70.6%, saturation voltage of 64 volts on T-V ramp-down (dotted-line) curve, and a field-off transparency (no memory effect) of 3.9%.

### MATERIALS

### 1- RESINS

### THERMOSETS

EPON 828 (epoxy resin, by Shell)
DER 331 (Dow Chemical)
HELOXY (reactive diluent, by Interorgana)
CAPCURE 3-800 (curing agent, by Henkel)

### UV CURABLE

NOA 65 (UV resin, by Norland)
SAM 114 (UV resin, by Merck)
CN934D60 (UV resin, by Cray Valley)
EBECRYL (UCE)

### THERMOPLASTICS

PIBMA (Polyisobutylmethacrylate, by Aldrich)
PARALOID B/72 (hydroxy functional acrylic resin, by Rohm & Haas)
QR 1033 (hydroxy functional acrylic resin, by BAYER)
N75 (Polyisocyanate, by BAYER)

### 2-LIQUID CRYSTALS

E43 (nematic mixture, by Merck)
E7 (nematic mixture, by Merck)
TNO623 (nematic mixture, by Hoffman-LaRoche)
YM1 (nematic mixture, by Valiant)

### 3-CHIRAL COMPOUNDS:

CB15 (pure chiral component, by Merck)
Cholesteryl Acetate (chiral component, by Aldrich)

### 4-CONDUCTIVE SUBSTRATES

### FLEXIBLE

ITO-PET* (by Courtaulds Performance Films (USA) or Southwall Technologies (USA), d=100-175 µm)

* ITO-PET=Indium Tin Oxide-Polyethylene Terephthalate

### 5-SPACERS:

Micro-pearls (d=5-30 microns by Dodwell Hi-Tech)
Micro-fibers (d=5-30 microns by Dodwell Hi-Tech)

The above description and accompanying drawings are provided for the purpose of describing embodiments of the invention and are not intended to limit the scope of the invention in any way. It will be apparent to those skilled in the art that various modifications and variations can be made in the LCDP films, their uses, and methods of manufacture without departing from the spirit or scope of the invention. Thus, it is intended that the present invention cover the modifications and variations of this invention provided they come within the scope of the appended claims and their equivalents.

## Claims

1. A liquid crystal dispersed polymer electrooptical film comprising a liquid crystal material and a polymer material, wherein the electrooptical film has a reverse morphology and the liquid crystal material has cholesteric properties.

2. The electrooptical film of claim 1, wherein the liquid crystal material comprises a nematic liquid crystal material and a chiral material.

3. The electrooptical film of claim 1, wherein the liquid crystal material comprises a chiral liquid crystal material.

4. The electrooptical film of claim 1, wherein the liquid crystal material comprises a cholesteric liquid crystal.

5. The electrooptical film of claim 1, wherein the electrooptical film has substantially no memory effect.

6. The electrooptical film of claim 1, wherein the electrooptical film has a memory effect.

7. The electrooptical film of claim 1, wherein the electrooptical film has a contrast ratio greater than 10.

8. The electrooptical film of claim 1, wherein the electrooptical film has a contrast ratio greater than 12.

9. The electrooptical film of claim 1, wherein the electrooptical film has a resistivity at 1000 Hz that is at least 50 percent greater than the resistivity of the comparison PDLC sample of Example 10.

10. The electrooptical film of claim 1, wherein the electrooptical film has a resistivity at 1000 Hz that is at least 75 percent greater than the resistivity of the comparison PDLC sample of Example 10.

11. The electrooptical film of claim 1, wherein the electrooptical film comprises greater than 20 percent by weight of polymer material relative to the total weight of liquid crystal material and polymer material.

12. The electrooptical film of claim 1, wherein the electrooptical film comprises 30 percent or more by weight of polymer material relative to the total weight of liquid crystal material and polymer material.

13. The electrooptical film of claim 1, wherein the electrooptical film comprises 40 percent or more by weight of polymer material relative to the total weight of liquid crystal material and polymer material.

14. The electrooptical film of claim 1, wherein the electrooptical film comprises 50 percent or more by weight of polymer material relative to the total weight of liquid crystal material and polymer material.

15. The electrooptical film of claim 1, wherein the electrooptical film comprises 60 percent or more by weight of polymer material relative to the total weight of liquid crystal material and polymer material.

16. The electrooptical film of claim 1, wherein the electrooptical film has the macro phase separation morphology.

17. The electrooptical film of claim 1, wherein the electrooptical film has the individual microsphere morphology.

18. The electrooptical film of claim 1, wherein the electrooptical film has the substantially joined together microsphere morphology.

19. The electrooptical film of claim 1, wherein the electrooptical film comprises spacers.

20. The electrooptical film of claim 1, wherein the electrooptical film does not comprise spacers.

21. The electrooptical film of claim 1, wherein the electrooptical film comprises a plastic sheet electrode.

22. The electrooptical film of claim 21, wherein the electrooptical film comprises at least two plastic sheet electrodes.

23. A liquid crystal dispersed polymer electrooptical film comprising a liquid crystal material and a polymer material, wherein the electrooptical film has a reverse morphology and substantially no memory effect.

24. The electrooptical film of claim 23, wherein the electrooptical film comprises greater than 20 percent by weight of polymer material relative to the total weight of liquid crystal material and polymer material.

25. The electrooptical film of claim 23, wherein the electrooptical film comprises 30 percent or more by weight of polymer material relative to the total weight of liquid crystal material and polymer material.

26. The electrooptical film of claim 23, wherein the electrooptical film comprises 40 percent or more by weight of polymer material relative to the total weight of liquid crystal material and polymer material.

27. The electrooptical film of claim 23, wherein the electrooptical film comprises 50 percent or more by weight of polymer material relative to the total weight of liquid crystal material and polymer material.

28. The electrooptical film of claim 23, wherein the electrooptical film comprises 60 percent or more by weight of polymer material relative to the total weight of liquid crystal material and polymer material.

29. The electrooptical film of claim 23, wherein the liquid crystal material has cholesteric properties.

30. The electrooptical film of claim 29, wherein the liquid crystal material comprises a nematic liquid crystal material and a chiral material.

31. The electrooptical film of claim 29, wherein the liquid crystal material comprises a chiral liquid crystal material.

32. The electrooptical film of claim 23, wherein the liquid crystal material has nematic properties.

33. The electrooptical film of claim 32, wherein the liquid crystal material comprises a nematic liquid crystal.

34. The electrooptical film of claim 23, wherein the electrooptical film has a contrast ratio greater than 10.

35. The electrooptical film of claim 23, wherein the electrooptical film has a contrast ratio greater than 12.

36. The electrooptical film of claim 23, wherein the electrooptical film has a resistivity at 1000 Hz that is at least 50 percent greater than the resistivity of the comparison PDLC sample of Example 10.

37. The electrooptical film of claim 23, wherein the electrooptical film has a resistivity at 1000 Hz that is at least 75 percent greater than the resistivity of the comparison PDLC sample of Example 10.

38. The electrooptical film of claim 23, wherein the electrooptical film has the macro phase separation morphology.

39. The electrooptical film of claim 23, wherein the electrooptical film has the individual microsphere morphology.

40. The electrooptical film of claim 23, wherein the electrooptical film has the substantially joined together microsphere morphology.

41. The electrooptical film of claim 23, wherein the electrooptical film comprises spacers.

42. The electrooptical film of claim 23, wherein the electrooptical film does not comprise spacers.

43. The electrooptical film of claim 23, wherein the electrooptical film comprises a plastic sheet electrode.

44. The electrooptical film of claim 43, wherein the electrooptical film comprises at least two plastic sheet electrodes.

45. A liquid crystal dispersed polymer electrooptical film comprising a liquid crystal material and a polymer material, wherein the electrooptical film has a reverse morphology and the electrooptical film comprises greater than 50 percent by weight of polymer material relative to the total weight of liquid crystal material and polymer material.

46. The electrooptical film of claim 45, wherein the electrooptical film comprises 55 percent or more by weight of polymer material relative to the total weight of liquid crystal material and polymer material.

47. The electrooptical film of claim 45, wherein the electrooptical film comprises 60 percent or more by weight of polymer material relative to the total weight of liquid crystal material and polymer material.

48. The electrooptical film of claim 45, wherein the liquid crystal material has cholesteric properties.

49. The electrooptical film of claim 48, wherein the liquid crystal material comprises a nematic liquid crystal material and a chiral material.

50. The electrooptical film of claim 48, wherein the liquid crystal material comprises a chiral liquid crystal material.

51. The electrooptical film of claim 45, wherein the electrooptical film has substantially no memory effect.

52. The electrooptical film of claim 45, wherein the electrooptical film has a memory effect.

53. The electrooptical film of claim 45, wherein the electrooptical film has a contrast ratio greater than 10.

54. The electrooptical film of claim 45, wherein the electrooptical film has a contrast ratio greater than 12.

55. The electrooptical film of claim 45, wherein the electrooptical film has a resistivity at 1000 Hz that is at least 50 percent greater than the resistivity of the comparison PDLC sample of Example 12.

56. The electrooptical film of claim 45, wherein the electrooptical film has a resistivity at 1000 Hz that is at least 75 percent greater than the resistivity of the comparison PDLC sample of Example 12.

57. The electrooptical film of claim 45, wherein the electrooptical film has the macro phase separation morphology.

58. The electrooptical film of claim 45, wherein the electrooptical film has the individual microsphere morphology.

59. The electrooptical film of claim 45, wherein the electrooptical film has the substantially joined together microsphere morphology.

60. The electrooptical film of claim 45, wherein the electrooptical film comprises a plastic sheet electrode.

61. The electrooptical film of claim 60, wherein the electrooptical film comprises at least two plastic sheet electrodes.

62. A method for producing a liquid crystal dispersed polymer electrooptical film comprising:
(a) providing a mixture of a liquid crystal material and a prepolymer material; and
(b) curing the mixture with ultraviolet radiation and cooling the mixture; to form an electrooptical film with a reverse morphology.

63. The method of claim 62, wherein the mixture is cured with ultraviolet radiation and then cooled.

64. The method of claim 62, wherein the mixture is cooled and then cured with ultraviolet radiation.

65. The method of claim 62, wherein the electrooptical film has a reverse morphology and the liquid crystal material has cholesteric properties.

66. The method of claim 65, wherein the liquid crystal material comprises a nematic liquid crystal material and a chiral material.

67. The method of claim 65, wherein the liquid crystal material comprises a chiral liquid crystal material.

68. The method of claim 62, wherein the electrooptical film has the macro phase separation morphology.

69. The method of claim 62, wherein the electrooptical film has the individual microsphere morphology.

70. The method of claim 62, wherein the electrooptical film has the substantially joined together morphology.

71. A method according to claim 62, wherein the electrooptical film has substantially no memory effect.

72. A method according to at least one of the preceding claims, wherein said mix is applied to a substrate.

73. A method according to at least one of the preceding claims, wherein said substrate is based on ITO-PET.

74. A method according to at least one of the preceding claims, wherein said substrate is wound on a roll before said application, is unwound from said roll during said application, and is finally wound on a second roll after said setting of said mix.

75. A method according to at least one of the preceding claims, wherein said mix is covered with a second substrate.

76. A method according to claim 76, wherein said second substrate is based on ITO-PET.

77. A method according to at least one of the preceding claims, wherein said second substrate is wound on a third roll before said application, is unwound from said roll during said application, and is finally wound onto said second roll after said setting of said mix.
